# EUROPEAN PATENT SPECIFICATION

(11) **EP 4 074 799 B1**
(45) Date of publication and mention of the grant of the patent: **21.10.2026**
(21) Application number: 20900266.6
(22) Date of filing: 27.11.2020
(51) Int. Cl.: C09J 11/06, C09J 11/08, C09J 121/02, C09J 161/12, D06M 13/395, D06M 15/41, D06M 15/693, B60C 9/00

(54) **ADHESIVE COMPOSITION, RUBBER/ORGANIC FIBER CORD COMPOSITE, AND TIRE**
KLEBSTOFFZUSAMMENSETZUNG, VERBUNDSTOFFFADEN AUS KAUTSCHUK/ORGANISCHEN FASERN UND REIFEN
COMPOSITION ADHÉSIVE, COMPOSITE CAOUTCHOUC/CÂBLE DE FIBRES ORGANIQUES, ET PNEU

(30) Priority: 09.12.2019 JP 2019222465
(43) Date of publication of application: 19.10.2022
(73) Proprietor: BRIDGESTONE CORPORATION, Chuo-ku Tokyo 104-8340 (JP)
(72) Inventor: TAKAHASHI, Yuka, Tokyo 104-8340 (JP); NAKAMURA, Masaaki, Tokyo 104-8340 (JP)
(74) Representative: Marks & Clerk LLP
(86) International application number: PCT/JP2020/044386
(87) International publication number: WO 2021/117521

(56) References cited:
- EP-A1- 2 426 253
- WO-A1-2012/112240
- JP-A- 2009 161 872
- JP-A- 2009 174 105
- JP-A- 2010 189 492
- JP-A- 2014 525 973
- JP-A- 2014 528 970
- JP-A- 2016 528 337
- DATABASE WPI Week 199236, Derwent World Patents Index; AN 1992-295575, XP002809055
- DATABASE WPI Week 201177, Derwent World Patents Index; AN 2011-P08812, XP002809056

## Description

### TECHNICAL FIELD

The present disclosure relates to an adhesive composition, a rubber-organic fiber cord composite, and a tire.

### BACKGROUND

Organic fibers such as polyester fibers have high initial elastic modulus and excellent thermal dimensional stability, and therefore are very useful as reinforcing material of rubber articles such as tires, belts, air springs, and rubber hoses in the form of filaments, cords, cables, cord fabric, canvas, etc. To improve the adhesiveness between such fibers and rubbers, various adhesive compositions are conventionally proposed. For example, techniques of using, as an adhesive composition, an RFL (resorcin formalin latex) adhesive containing resorcin, formalin, rubber latex, and the like and heat curing the RFL adhesive to ensure adhesiveness are known (for example, see PTL 1 to PTL 3).

Regarding adhesive compositions, techniques of using resorcin formalin resin obtained by initial condensation of resorcin and formalin (for example, see PTL 4, PTL 5, EP 3546244 A1 and KR 2017 0087245A) and techniques of pretreating a tire cord made of polyester fiber or the like using epoxy resin to improve adhesiveness are also known.

Formalin which is commonly used in the foregoing adhesive compositions is an important raw material for crosslinking resorcin. However, there is a need to reduce usage of formalin in view of working environments in recent years. Likewise, reduction in usage of resorcin is needed from an environmental viewpoint.

Hence, some environmentally conscious adhesive compositions not containing resorcin and formalin and adhesion methods are proposed (for example, see PTL 6), FR 2978770 A1). However, adhesive compositions not containing resorcin and formalin take time for curing, and therefore further improvement in productivity and adhesiveness is needed.

Moreover, in the case of using polyethylene terephthalate (PET) fiber as an organic fiber subjected to adhesion, the adhesiveness of an adhesive composition not containing resorcin and formalin tends to be insufficient, which needs to be improved. This is because, when polyester fiber material which is a linear macromolecule having an ester bond in a main chain such as polyethylene terephthalate with good thermal dimensional stability is used as a reinforcing member of a rubber product, the structure is dense, and also an adhesive composition obtained by mixing raw material for crosslinking water-soluble phenol and latex such as RFL has little adhesion for polyester fiber material with few functional groups.

In view of this, as adhesive treatment for an inert tire cord such as polyester or aramid, two-bath treatment of performing pretreatment with epoxy or the like and then dipping in resorcin formaldehyde latex (RFL) is commonly used. However, while two-bath treatment achieves sufficient adhesiveness, the overall costs tend to be high due to increases in processing costs and restrictions in equipment by two-bath treatment. There is thus a demand to develop a technique that can achieve high adhesiveness even when one-bath treatment is used.

As such a technique, for example, PTL 7 proposes a method of containing an isocyanate compound for facilitating adhesion in an adhesive composition containing rubber latex. However, a technique of ensuring adhesiveness of polyester fiber material by one-bath treatment using a thermosetting resin component of an adhesive composition not containing resorcin and formalin is not proposed.

PTL 8 discloses an adhesive composition that may comprise a glycidyl-protected polyphenol, an aromatic aldehyde and an isocyanate. PTL 9 discloses an adhesive composition containing an aromatic aldehyde, a blocked isocyanate compound and a resorcinol-formaldehyde resin.

### CITATION LIST

### Patent Literature

PTL 1: JP S58-2370 A
PTL 2: JP S60-92371 A
PTL 3: JP S60-96674 A
PTL 4: JP S63-249784 A
PTL 5: JP S63-61433 B2
PTL 6: JP 2010-255153 A
PTL 7: JP 2013-82923 A
PTL 8: JP H04 202416 A
PTL 9: WO 2012/112240 A1

### SUMMARY

### (Technical Problem)

It could therefore be helpful to provide an adhesive composition that has excellent adhesiveness even when formalin and resorcin are not contained.

It could also be helpful to provide a rubber-organic fiber cord composite and a tire that are environmentally friendly, have high productivity, and have excellent adhesiveness between a rubber and an organic fiber cord.

### (Solution to Problem)

As a result of conducting study, we learned that there is a possibility that, by containing a specific polyphenol and aldehyde having aromatic ring in an adhesive composition, high adhesiveness can be achieved even without using formalin and resorcin. We then conducted further study, and discovered that, by containing a specific isocyanate compound in the adhesive composition in addition to the polyphenol and the aldehyde having aromatic ring, excellent adhesiveness can be achieved by their synergistic effect.

An adhesive composition according to the present disclosure comprises: polyphenol not containing resorcin; aldehyde having aromatic ring; an isocyanate compound; and rubber latex, wherein the polyphenol has three or more hydroxyl groups, and wherein a content of the isocyanate compound is 5 mass % to 65 mass%.

Such adhesive composition has excellent adhesiveness even when formalin and resorcin are not contained.

The adhesive composition according to the present disclosure comprises rubber latex. Preferably, the rubber latex is at least one selected from the group consisting of natural rubber (NR), polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), and vinylpyridine-styrene-butadiene copolymer rubber (Vp). As a result of the rubber latex component being contained in the adhesive composition, the interaction and covulcanization with a rubber component of an adherend rubber contribute to excellent adhesiveness to the adherend rubber.

**In** the adhesive composition according to the present disclosure, the polyphenol has three or more hydroxyl groups. Better adhesiveness can thus be achieved.

Preferably, in the adhesive composition according to the present disclosure, the aldehyde has two or more aldehyde groups. Better adhesiveness can thus be achieved.

Preferably, in the adhesive composition according to the present disclosure, the isocyanate compound is a (blocked) isocyanate group-containing aromatic compound. Better adhesiveness can thus be achieved.

Preferably, in the adhesive composition according to the present disclosure, a total content of the polyphenol and the aldehyde having aromatic ring is 2 mass% to 30 mass%, a content of the rubber latex is 20 mass% to 90 mass%. According to the invention the content of the isocyanate compound is 5 mass% to 65 mass%. Better adhesiveness can thus be achieved without a decrease in productivity.

Herein, "mass%" representing the content of each component in the adhesive composition according to the present disclosure is the ratio of the component in terms of solid content in dry matter of the composition.

A method of producing an adhesive composition according to the present disclosure is a method of producing an adhesive composition for organic fiber cords, comprising: aging a solution obtained by mixing polyphenol and aldehyde having aromatic ring , which is condensed beforehand and latex; and thereafter dissolving an isocyanate compound in the solution. The obtained adhesive composition has excellent adhesiveness even when formalin and resorcin are not contained.

A rubber-organic fiber cord composite according to the present disclosure is a rubber-organic fiber cord composite comprising: a rubber member; and an organic fiber cord, wherein at least part of the organic fiber cord is coated with the foregoing adhesive composition according to the present disclosure.

Such rubber-organic fiber cord composite is environmentally friendly and has improved adhesiveness between the rubber and the organic fiber cord.

Preferably, in the rubber-organic fiber cord composite according to the present disclosure, the organic fiber cord is a polyethylene terephthalate (PET) fiber cord. Thus, the effect of improving the adhesiveness between the rubber and the organic fiber cord according to the present disclosure is exerted more remarkably.

A tire according to the present disclosure is a tire comprising the foregoing rubber-organic fiber cord composite according to the present disclosure.

Such tire is environmentally friendly and has improved adhesiveness between the rubber and the organic fiber cord.

### (Advantageous Effect)

It is thus possible to provide an adhesive composition that has excellent adhesiveness even when formalin and resorcin are not contained.

It is also possible to provide a rubber-organic fiber cord composite and a tire that are environmentally friendly and have excellent adhesiveness between a rubber and an organic fiber cord.

### DETAILED DESCRIPTION

### <Adhesive Composition>

An embodiment of an adhesive composition according to the present disclosure will be described in detail below.

An adhesive composition according to the present disclosure comprises polyphenol, aldehyde having aromatic ring, and an isocyanate compound, wherein the polyphenol has three or more hydroxyl groups.

### (Polyphenol)

The adhesive composition according to the present disclosure contains polyphenol as a resin component. As a result of the polyphenol being contained in the adhesive composition, the adhesiveness of the resin composition can be enhanced.

The polyphenol is water-soluble and other than resorcin (resorcinol), and the number of aromatic rings may be selected as appropriate.

The polyphenol has three or more hydroxyl groups, from the viewpoint of achieving better adhesiveness. With the polyphenol having three or more hydroxyl groups, the polyphenol or a condensate of the polyphenol can be uniformly distributed in a moisture-containing adhesive composition liquid as a result of dissolving in water. Hence, better adhesiveness can be achieved.

In the case where the polyphenol contains a plurality of (i.e. two or more) aromatic rings, two or three hydroxyl groups are present at the ortho, meta, or para position in each of these aromatic rings.

Examples of the polyphenol having three or more hydroxyl groups include
phloroglucinol: 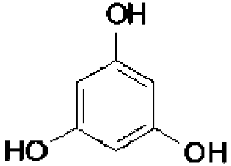
morin (2',4',3,5,7-pentahydroxyflavone): 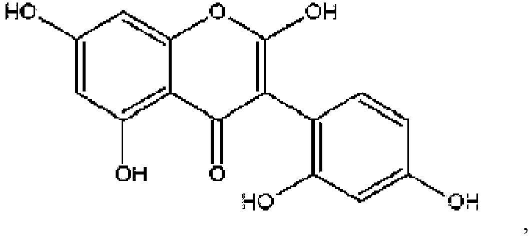 and
phloroglucide (2,4,6,3,'5'-biphenylpentol):

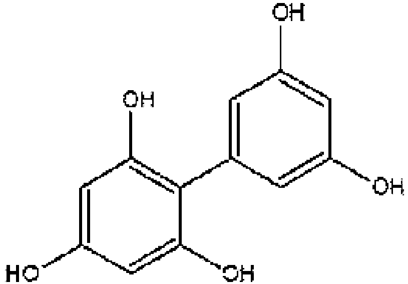

Of these, the polyphenol compound (except resorcin) is preferably phloroglucinol.

Such polyphenol compound is more environmentally friendly than resorcin, and can serve as a material of the adhesive composition for organic fiber cords having good adhesiveness at reasonable costs.

The content of the polyphenol compound (except resorcin) is not limited, but is preferably 1.5 mass% or more and more preferably 2.0 mass% or more in terms of solid content in dry matter from the viewpoint of ensuring better adhesiveness. The content of the polyphenol compound (except resorcin) is not limited, but is preferably 13 mass% or less and more preferably 11 mass% or less in terms of solid content in dry matter from the viewpoint of reliably dissolving the polyphenol compound (except resorcin) and achieving better operability.

### (Aldehyde having aromatic ring)

The adhesive composition according to the present disclosure contains aldehyde having aromatic ring as a resin component, in addition to the foregoing polyphenol.

As a result of the aldehyde having aromatic ring being contained in the adhesive composition together with the polyphenol, high adhesiveness can be achieved.

The aldehyde having aromatic ring is not limited, and the number of aromatic rings and the number of aldehyde groups may be selected as appropriate. The aldehyde having aromatic ring does not contain formaldehyde.

Herein, the expression "not containing formaldehyde" means that the mass content of formaldehyde with respect to the total mass of the aldehyde is less than 0.5 mass%.

The aldehyde having aromatic ring is an aromatic aldehyde containing at least one aromatic ring and containing at least one aldehyde group in one molecule. The aldehyde having aromatic ring is more environmentally friendly than formaldehyde, and enables formation of a relatively inexpensive resin that has excellent mechanical strength, electric insulation, acid resistance, water resistance, heat resistance, etc.

The aldehyde having aromatic ring preferably has two or more aldehyde groups, from the viewpoint of achieving better adhesiveness. As a result of the aldehyde crosslinking by the plurality of aldehyde groups and condensing, the degree of crosslinking of the thermosetting resin can be increased, and thus the adhesiveness can be further enhanced.

In the case where the aldehyde has two or more aldehyde groups, it is more preferable that two or more aldehyde groups are present in one aromatic ring. Each aldehyde group can be present at the ortho, meta, or para position in one aromatic ring.

Examples of the aldehyde include 1,2-benzenedicarboxaldehyde, 1,3-benzenedicarboxaldehyde, 1,4-benzenedicarboaldehyde, 2-hydroxybenzene-1,3,5-tricarbaldehyde, and mixtures of these compounds.

Of these, at least 1,4-benzenedicarboaldehyde is preferably used as the aldehyde having aromatic ring, from the viewpoint of achieving better adhesiveness:

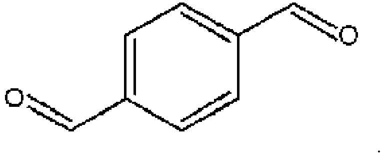

Examples of the aldehyde having aromatic ring include not only benzene ring-containing aldehydes but also heteroaromatic compounds.

An example of aldehydes that are heteroaromatic compounds is the following furan ring-containing aldehyde: 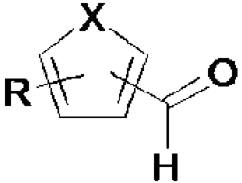 (where X includes O, and R represents -H or -CHO).

The furan ring-containing aldehyde is, for example, the following compound: 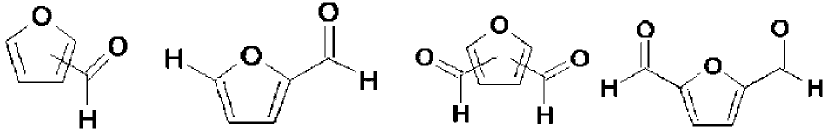 (where R represents -H or -CHO, and R1, R2, and R3 each represent an alkyl, aryl, arylalkyl, alkylaryl, or cycloalkyl group).

The content of the aldehyde having aromatic ring compound is not limited, but is preferably 0.5 mass% or more and more preferably 1.0 mass% or more in terms of solid content in dry matter from the viewpoint of ensuring better adhesiveness. The content of the aldehyde having aromatic ring compound is not limited, but is preferably 9.5 mass% or less and more preferably 8.5 mass% or less in terms of solid content in dry matter from the viewpoint of reliably dissolving the aldehyde having aromatic ring compound and achieving better operability.

In the adhesive composition according to the present disclosure, the polyphenol and the aldehyde having aromatic ring are in a condensed state, and the mass ratio of the polyphenol and the aldehyde having aromatic ring ((the content of the aldehyde having aromatic ring)/(the content of the polyphenol)) is preferably 0.1 or more and 3 or less and more preferably 0.25 or more and 2.5 or less. Condensation reaction occurs between the polyphenol and the aldehyde having aromatic ring, and the resin obtained as a result has more suitable hardness and adhesiveness.

The total content of the polyphenol and the aldehyde having aromatic ring in the adhesive composition according to the present disclosure is preferably 2 mass% to 30 mass%, more preferably 3 mass% to 25 mass%, and further preferably 5 mass% to 20 mass%. In this way, better adhesiveness can be ensured without a decrease in operability and the like.

Herein, the mass ratio and the total content of the polyphenol and the aldehyde having aromatic ring are in terms of mass of dry matter (solid content ratio).

### (Isocyanate Compound)

The adhesive composition according to the present disclosure further contains an isocyanate compound in addition to the foregoing polyphenol and aldehyde having aromatic ring. Its synergistic effect with the polyphenol and the aldehyde having aromatic ring can significantly enhance the adhesiveness of the adhesive composition according to the present disclosure.

Herein, the isocyanate compound is a compound that has a function of facilitating adhesion to resin material (for example, phenol-aldehyde resin obtained by condensing polyphenol and aldehyde having aromatic ring) which is the adherend of the adhesive composition and has at least one isocyanate group as a polar functional group.

The type of the isocyanate compound is not limited, but is preferably a (blocked) isocyanate group-containing aromatic compound from the viewpoint of further improving the adhesiveness. When the isocyanate compound is contained in the adhesive composition according to the present disclosure, the (blocked) isocyanate group-containing aromatic distributes in the vicinity of the interface between the adherend fiber and the adhesive composition, thus producing the adhesion facilitating effect. With this functional effect, the adhesion to the organic cord can be further enhanced.

The (blocked) isocyanate group-containing aromatic compound is an aromatic compound having a (blocked) isocyanate group. Herein, the term "(blocked) isocyanate group" denotes a blocked isocyanate group or an isocyanate group, and includes not only an isocyanate group but also a blocked isocyanate group resulting from reaction with a blocking agent for isocyanate groups, an isocyanate group unreacted with a blocking agent for isocyanate groups, and an isocyanate group resulting from dissociation of a blocking agent of a blocked isocyanate group.

The (blocked) isocyanate group-containing aromatic compound preferably contains a molecular structure in which aromatics are bonded by an alkylene chain, and more preferably contains a molecular structure in which aromatics are methylene-bonded. Examples of the molecular structure in which aromatics are bonded by an alkylene chain include molecular structures in diphenylmethane diisocyanate, polyphenylene polymethylene polyisocyanate, or condensates of phenols and formaldehyde.

Examples of the (blocked) isocyanate group-containing aromatic compound include a compound containing aromatic polyisocyanate and a thermally dissociative blocking agent, a water-dispersible compound containing a component obtained by blocking diphenylmethane diisocyanate or aromatic polyisocyanate by a thermally dissociative blocking agent, and an aqueous urethane compound.

A preferred example of the compound containing aromatic polyisocyanate and a thermally dissociative blocking agent is a blocked isocyanate compound containing diphenylmethane diisocyanate and a known isocyanate blocking agent. An example of the water-dispersible compound containing a component obtained by blocking diphenylmethane diisocyanate or aromatic polyisocyanate by a thermally dissociative blocking agent is a reaction product obtained by blocking diphenylmethane diisocyanate or polymethylene polyphenyl polyisocyanate by a known blocking agent for blocking isocyanate groups. Specifically, commercially available blocked polyisocyanate compounds such as ELASTRON BN69 and ELASTRON BN77 (produced by DKS Co. Ltd.) and MEIKANATE TP-10 (produced by Meisei Chemical Works, Ltd.) are available.

The aqueous urethane compound is obtained by reaction of an organic polyisocyanate compound (α) containing a molecular structure in which aromatics are bonded by an alkylene chain and preferably containing a molecular structure in which aromatics are methylene-bonded, a compound (β) containing a plurality of active hydrogen, and a thermally dissociative blocking agent (γ) for isocyanate groups. The aqueous urethane compound (F), with its flexible molecular structure, has not only a function as an adhesion improving agent but also a function of suppressing fluidization of the adhesive at high temperature as a flexible crosslinking agent.

Herein, the term "aqueous" denotes being water-soluble or water-dispersible. The term "water-soluble" denotes not only being completely water-soluble but also being partially water-soluble or not undergoing phase separation in a water solution of the adhesive composition according to the present disclosure.

As the aqueous urethane compound (F), for example, an aqueous urethane compound expressed by the following general formula (I) is preferable: 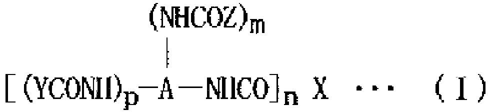 (where A is a residue resulting from elimination of active hydrogen of the organic polyisocyanate compound (α) containing a molecular structure in which aromatics are bonded by an alkylene chain, Y is a residue resulting from elimination of active hydrogen of the thermally dissociative blocking agent (γ) for isocyanate groups, Z is a residue resulting from elimination of active hydrogen of a compound (δ), X is a residue resulting from elimination of active hydrogen of the compound (β) having a plurality of active hydrogen, n is an integer of 2 to 4, and p + m is an integer of 2 to 4 (m ≥ 0.25)).

Examples of the organic polyisocyanate compound (α) containing a molecular structure in which aromatics are bonded by an alkylene chain include methylene diphenyl polyisocyanate and polymethylene polyphenyl polyisocyanate.

The compound (β) having a plurality of active hydrogen is preferably a compound having two to four active hydrogen and having an average molecular weight of 5,000 or less. Examples of such compound (β) include (i) polyhydric alcohols having two to four hydroxyl groups, (ii) polyamines having two to four primary and/or secondary amino groups, (iii) aminoalcohols having two to four primary and/or secondary amino groups and hydroxyl groups, (iv) polyester polyols having two to four hydroxyl groups, (v) polybutadiene polyols having two to four hydroxyl groups and copolymers thereof with other vinyl monomers, (vi) polychloroprene polyols having two to four hydroxyl groups and copolymers thereof with other vinyl monomers, and (vii) polyether polyols having two to four hydroxyl groups and being C2 to C4 alkylene oxide polyaddition products of polyamines, polyhydric phenols, and aminoalcohols, C2 to C4 alkylene oxide polyaddition products of polyhydric alcohols of C3 or more, C2 to C4 alkylene oxide copolymers, and C3 to C4 alkylene oxide polymers.

The thermally dissociative blocking agent (γ) for isocyanate groups is a compound capable of liberating isocyanate groups by heat treatment, and may be, for example, a known isocyanate blocking agent.

The compound (δ) is a compound having at least one active hydrogen and anionic and/or nonionic hydrophilic group. Examples of the compound having at least one active hydrogen and anionic hydrophilic group include aminosulfonic acids such as taurine, N-methyltaurine, N-butyltaurine, and sulfanilic acid, and aminocarboxylic acids such as glycine and alanine. Examples of the compound having at least one active hydrogen and nonionic hydrophilic group include compounds having a hydrophilic polyether chain.

The content of the isocyanate compound in the adhesive composition according to the present disclosure is 5 mass% to 65 mass %, preferably 5 mass% to 55 mass%, and more preferably 10 mass% to 50 mass% from the viewpoint of ensuring excellent adhesiveness more reliably.

The content of the isocyanate compound is in terms of mass of dry matter (solid content ratio).

### (Rubber Latex)

The adhesive composition according to the present disclosure contains rubber latex in addition to the foregoing polyphenol, aldehyde having aromatic ring, and isocyanate compound. This further enhances the adhesiveness to the rubber member.

The rubber latex is not limited. Examples of the rubber latex that can be used include natural rubber (NR) and synthetic rubbers such as polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), and vinylpyridine-styrene-butadiene copolymer rubber (Vp). These rubber components may be used alone or in a blend of two or more.

The rubber latex is preferably mixed with the phenol and the aldehyde before blending the isocyanate compound.

The content of the rubber latex in the adhesive composition according to the present disclosure is preferably 20 mass% to 90 mass%, more preferably 25 mass% to 80 mass%, and further preferably 30 mass% to 75 mass%.

### <Method of Producing Adhesive Composition>

A method of producing an adhesive composition according to the present disclosure will be described below.

The method of producing an adhesive composition according to the present disclosure is a method of producing an adhesive composition for organic fiber cords, comprising: mixing and aging a solution in which polyphenol and aldehyde having aromatic ring are dissolved and latex; and thereafter adding an isocyanate compound.

As a result of adding the specific isocyanate compound into the adhesive composition in addition to the polyphenol, the aldehyde having aromatic ring, and the latex, the resultant adhesive composition has excellent adhesiveness.

A solvent for dissolving the polyphenol and the aldehyde having aromatic ring is not limited, and examples include water and a sodium hydroxide solution. The solvent preferably contains water and a sodium hydroxide solution and/or an ammonia water solution, from the viewpoint of dissolving the polyphenol more reliably.

The temperature of the water is preferably 40 °C or more and more preferably 60 °C or more, from the viewpoint of dissolving the polyphenol and the aldehyde having aromatic ring more reliably.

It is preferable to gradually add the aldehyde having aromatic ring to a solution containing the polyphenol in the adhesive composition, from the viewpoint of suppressing a decrease in productivity while dissolving the aldehyde having aromatic ring more reliably.

The structure, content, etc. of each of the polyphenol and the aldehyde having aromatic ring are the same as those described with regard to the foregoing adhesive composition according to the present disclosure.

In the method of producing an adhesive composition according to the present disclosure, rubber latex may be added as mentioned above.

As a result of adding the rubber latex, the adhesiveness of the obtained adhesive composition to the rubber member can be further improved. The structure, content, etc. of the rubber latex are the same as those described with regard to the foregoing adhesive composition according to the present disclosure.

In the method of producing an adhesive composition according to the present disclosure, in the case of adding the rubber latex, it is more preferable to age the rubber latex after the addition. In this way, the latex is coagulated more reliably, so that the handling easiness of the adhesive composition can be improved and the adhesiveness of the adhesive composition can be enhanced.

Herein, the aging of the rubber latex denotes letting a certain time pass after adding and mixing the latex in order to improve the properties of the latex. The aging conditions are not limited. For example, the rubber latex can be aged at about 25 °C for 1 hour to 1 week.

In the present disclosure, an isocyanate compound is added after mixing and aging the solution in which the polyphenol and the aldehyde having aromatic ring are dissolved and the latex, as mentioned above.

As a result of adding the isocyanate compound, its synergistic effect with the polyphenol and the aldehyde having aromatic ring can significantly enhance the adhesiveness of the obtained adhesive composition.

The structure, content, etc. of the isocyanate compound are the same as those described with regard to the foregoing adhesive composition according to the present disclosure.

In the method of producing an adhesive composition according to the present disclosure, the adhesive composition can be composed of a one-bath treatment liquid. One-bath treatment is a process of dipping an organic fiber cord subjected to adhesion in one treatment liquid (adhesive composition) to adhere the adhesive composition to the surface of the organic fiber cord.

In the case where the adhesive composition is composed of a one-bath treatment liquid, for example, the foregoing components are added in the following order: A phenol-aldehyde resin obtained by condensing the polyphenol and the aldehyde having aromatic ring is prepared, which is then optionally mixed with the latex. After this, the isocyanate compound is added to prepare a treatment liquid. The organic fiber cord is then dipped in the treatment liquid, as a result of which the organic fiber cord can be coated with the adhesive composition.

### <Rubber-Organic Fiber Cord Composite>

A rubber-organic fiber cord composite according to the present disclosure is a rubber-organic fiber cord composite comprising a rubber member and an organic fiber cord, wherein at least part of the organic fiber cord is coated with the foregoing adhesive composition according to the present disclosure.

Since the rubber-organic fiber cord composite according to the present disclosure uses the adhesive composition according to the present disclosure, the rubber-organic fiber cord composite is environmentally friendly and has excellent adhesiveness between the rubber and the organic fiber cord.

The application of the rubber-organic fiber cord composite according to the present disclosure is not limited, and the rubber-organic fiber cord composite can be used, for example, as a member of a belt, an air spring, a hose, or the like.

In the rubber-organic fiber cord composite according to the present disclosure, at least part of the organic fiber cord is coated with the adhesive composition according to the present disclosure. From the viewpoint of further improving the adhesiveness between the rubber and the organic fiber cord, the whole surface of the organic fiber cord is preferably coated with the adhesive composition according to the present disclosure.

The type of the organic fiber cord is not limited, and may be selected as appropriate according to the purpose. Here, the organic fiber cord is used to supplement the strength of a rubber article such as a tire. When using the organic fiber cord as reinforcing material, a monofilament cord of raw yarn of a spun organic fiber or a twisted cord obtained by twisting a multifilament cord can be used as the organic fiber cord. The organic fiber cord is then buried in the rubber for coating the organic fiber cord using the adhesive composition and vulcanization is performed to cause adhesion, thus forming the organic fiber cord-rubber composite. The organic fiber cord-rubber composite can be used as a reinforcement member of a rubber article such as a tire.

The material of the organic fiber cord is not limited. Examples of materials that can be used include resin fiber materials such as polyethylene terephthalate (PET) fiber cords, aliphatic polyamide fiber cords of polyester, 6-nylon, 6,6-nylon, 4,6-nylon, etc., protein fiber cords such as artificial fibroin fibers, polyketone fiber cords, aromatic polyamide fiber cords of polynonamethylene terephthalamide, paraphenylene terephthalamide, etc., acrylic fiber cords, carbon fiber cords, and cellulose fiber cords of rayon, lyocell, etc., and mixtures of these fiber materials.

From the viewpoint of more remarkably exerting the effect of reducing the environmental load and achieving excellent adhesiveness between the rubber and the organic fiber cord according to the present disclosure, a polyethylene terephthalate (PET) fiber cord is preferably used as the organic fiber cord, because the polyethylene terephthalate (PET) fiber cord tends not to have high adhesiveness to the rubber member.

### <Tire>

A tire according to the present disclosure comprises the foregoing rubber-organic fiber cord composite according to the present disclosure.

In the tire according to the present disclosure, the rubber-organic fiber cord composite according to the present disclosure can be used, for example, as a carcass ply, a belt layer, a belt reinforcement layer, or a belt periphery reinforcement layer such as a flipper.

A pneumatic tire according to the present disclosure is not limited as long as the foregoing rubber article is used, and can be produced according to a usual method. A gas with which the tire is filled may be normal air or air with adjusted oxygen partial pressure, or an inert gas such as nitrogen, argon, or helium.

### EXAMPLES

The presently disclosed techniques will be described in more detail below by way of examples, although the present disclosure is not limited to these examples.

### <Adhesive Compositions 1 to 8>

Adhesive compositions as samples were prepared according to the formulations shown in Table 1 and the production conditions shown in Table 2.

### (1) Production Conditions of Adhesive Compositions 1 to 4

First, phloroglucinol was dissolved in water of about 100 °C, to obtain a phloroglucinol-containing solution with a concentration of 10 wt%.

After this, while stirring 33.5 g of the 10 wt% phloroglucinol solution at high temperature, 18.2 g of 4 % sodium hydroxide was added. The solution was then diluted with 206 g of water, and 7.5 g of 25 % ammonia water was added. 6.4 g of 1,4-benzenedicarboaldehyde was gradually added into the solution, to obtain a phloroglucinol 1,4-benzenedicarboaldehyde-containing solution. The solution was then aged with the temperature and the time shown in Table 3, to obtain a phenol-aldehyde resin.

Vinylpyridine-styrene-butadiene copolymer rubber (Vp), styrene-butadiene copolymer rubber, and natural rubber were added to the phenol-aldehyde resin obtained by aging the phloroglucinol 1,4-benzenedicarboaldehyde-containing solution, and the rubbers were aged at 27 °C for 24 hr. Further, a specific isocyanate compound was added to a liquid mixture of the phenol-aldehyde resin and Vp at the compounding ratio shown in Table 2.

The ingredients of each of adhesive compositions 1 to 4 are indicated as formulation A in Tables 1 and 2. Table 1 shows the compounding amount (mass%) as solid content, and Table 2 shows the compounding amount (mass%) in a solution state.

### (2) Production Conditions of Adhesive Compositions 5 to 8

First, phloroglucinol was dissolved in water of 100 °C, to obtain a phloroglucinol-containing solution with a concentration of 10 wt%.

After this, while stirring 33.5 g of the 10 wt% phloroglucinol solution at high temperature, 18.2 g of 4 % sodium hydroxide was added. The solution was then diluted with 206 g of water, and 7.5 g of 25 % ammonia water was added. 6.4 g of 1,4-benzenedicarboaldehyde was gradually added into the solution, to obtain a phloroglucinol 1,4-benzenedicarboaldehyde-containing solution. The solution was then aged with the temperature and the time shown in Table 3, to obtain a phenol-aldehyde resin.

Vinylpyridine-styrene-butadiene copolymer rubber (Vp), styrene-butadiene copolymer rubber, and natural rubber were added to the phenol-aldehyde resin obtained by aging the phloroglucinol 1,4-benzenedicarboaldehyde-containing solution, and the rubbers were aged at 27 °C for 24 hr.

The ingredients of each of adhesive compositions 5 to 8 are indicated as formulation B in Tables 1 and 2. Table 1 shows the compounding amount (mass%) as solid content, and Table 2 shows the compounding amount (mass%) in a solution state.

**[Table 1]**

| Ingredient (solid content: mass%) | Formulation A | Formulation B |
|---|---|---|
| Phloroglucinol *1 | 3.3 | 4.7 |
| 1,4-benzenedicarboxaldehyde *2 | 6.2 | 8.8 |
| Sodium hydroxide *3 | 0.7 | 1.0 |
| Ammonia *4 | 1.8 | 2.6 |
| Natural rubber *5 | 23.2 | 33.2 |
| Styrene-butadiene copolymer rubber *6 | 11.6 | 16.6 |
| Vinylpyridine-styrene-butadiene copolymer rubber *7 | 23.2 | 33.2 |
| Isocyanate compound *8 | 30.0 | - |
| Total mass% | 100.0 | 100.0 |

**[Table 2]**

| Ingredient (mass%) | Formulation A | Formulation B |
|---|---|---|
| Phloroglucinol *1 | 8.2 | 9.0 |
| 1,4-benzenedicarboxaldehyde *2 | 1.6 | 1.7 |
| Sodium hydroxide *3 | 4.5 | 4.9 |
| Ammonia *4 | 1.8 | 2.0 |
| Natural rubber *5 | 4.9 | 10.7 |
| Styrene-butadiene copolymer rubber *6 | 7.3 | 8.0 |
| Vinylpyridine-styrene-butadiene copolymer rubber *7 | 14.3 | 15.6 |
| Water | 27.5 | 48.1 |
| Isocyanate compound *8 | 30 | - |
| Total mass% | 100.0 | 100.0 |

| | | |
|---|---|---|
| *1: produced by FUJIFILM Wako Pure Chemical Corporation, used as 10 % water solution. *2: produced by Tokyo Chemical Industry Co., Ltd., purity: 98 %. *3: produced by Kanto Chemical Co., Inc., 1N NaOH water solution. *4: produced by Kanto Chemical Co., Inc., 25 % ammonia water solution. *5: produced by Sime Darby, HYTEX HA. *6: produced by JSR Corporation, SBR latex 2108. *7: produced by Nippon A&L Inc., PYRATEX. *8: produced by DKS Co. Ltd., BN77, used in diluted state of 18 % in solid content concentration. | | |

### <Adhesiveness Evaluation>

Polyester cords for tires coated with the adhesive compositions of the respective samples were each buried in a rubber composition in an unvulcanized state containing natural rubber, a rubber component composed of a styrene-butadiene copolymer, carbon black, and a crosslinking agent. The resultant test piece was vulcanized at 160 °C for 20 min under pressure of 20 kgf/cm².

The obtained vulcanizate was cooled to room temperature, and the cord was dug up from the vulcanizate. The resistance (N/cord) when separating the cord from the vulcanizate at a speed of 30 cm/min was measured at room temperature (ambient temperature) of 25 ± 1 °C. The resistance was used as an index in the adhesiveness evaluation.

The measured resistance upon separation of each of the respective test pieces using adhesive compositions 1 to 8 is shown in Table 3. The resistance in each of Examples 1, 2, 3 and 4 is indicated as an index in Table 3, where the resistance in each of Comparative Examples 5, 6, 7 and 8 with the same aging conditions is 100.

**[Table 3]**

| Sample No. of adhesive composition | | Example | | | | Comparative Example | | | |
|---|---|---|---|---|---|---|---|---|---|
| | | 1 | 2 | 3 | 4 | 5 | 6 | 7 | 8 |
| Production conditions | Formulation of adhesive composition | Formulation A | Formulation A | Formulation A | Formulation A | Formulation B | Formulation B | Formulation B | Formulation B |
| | Aging temperature of phenol-aldehyde resin solution (°C) | 25 | 25 | 50 | 50 | 25 | 25 | 50 | 50 |
| | Aging time of phenol-aldehyde resin solution (H) | 0 | 2 | 2 | 4 | 0 | 2 | 2 | 4 |
| Evaluation | Adhesiveness (N/cord) | 13.3 | 11.1 | 11.0 | 15.6 | 2.46 | 2.66 | 2.79 | 2.77 |
| | Index of adhesiveness | 541 | 417 | 394 | 563 | 100 | 100 | 100 | 100 |

As can be understood from the results in Table 3, the adhesiveness when using each of adhesive compositions 1 to 4 of Examples was greatly superior to the adhesiveness when using each of adhesive compositions 5 to 8 of Comparative Examples.

### INDUSTRIAL APPLICABILITY

It is thus possible to provide an adhesive composition that has excellent adhesiveness even when formalin and resorcin are not contained.

It is also possible to provide a rubber-organic fiber cord composite and a tire that are environmentally friendly and have excellent adhesiveness between a rubber and an organic fiber cord.

## Claims

1. An adhesive composition comprising:
polyphenol not containing resorcin;
aldehyde having aromatic ring;
an isocyanate compound; and
rubber latex,
wherein the polyphenol has three or more hydroxyl groups, and
wherein a content of the isocyanate compound is 5 mass% to 65 mass%.

2. The adhesive composition according to claim 1, wherein the aldehyde has two or more aldehyde groups.

3. The adhesive composition according to claim 1 or 2, wherein the isocyanate compound is a (blocked) isocyanate group-containing aromatic compound.

4. The adhesive composition according to claim 1, wherein the rubber latex is at least one selected from the group consisting of natural rubber (NR), polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), and vinylpyridine-styrene-butadiene copolymer rubber (Vp).

5. The adhesive composition according to any one of claims 1 to 4, wherein a total content of the polyphenol and the aldehyde having aromatic ring is 2 mass% to 30 mass%, and a content of the rubber latex is 20 mass% to 90 mass%.

6. A rubber-organic fiber cord composite comprising:
a rubber member; and
an organic fiber cord,
wherein at least part of the organic fiber cord is coated with the adhesive composition according to any one of claims 1 to 5.

7. The rubber-organic fiber cord composite according to claim 6, wherein the organic fiber cord is a polyethylene terephthalate (PET) fiber cord.

8. A tire comprising
the rubber-organic fiber cord composite according to claim 6 or 7.

## Patentansprüche

1. Klebstoffzusammensetzung, umfassend:
Polyphenol, das kein Resorcin enthält;
Aldehyd, das einen aromatischem Ring aufweist;
eine Isocyanatverbindung; und
Kautschuklatex,
wobei das Polyphenol drei oder mehr Hydroxylgruppen aufweist, und
wobei ein Gehalt an der Isocyanatverbindung 5 Masse-% bis 65 Masse-% beträgt.

2. Klebstoffzusammensetzung nach Anspruch 1, wobei das Aldehyd zwei oder mehr Aldehydgruppen aufweist.

3. Klebstoffzusammensetzung nach Anspruch 1 oder 2, wobei die Isocyanatverbindung eine (blockierte) Isocyanatgruppe enthaltende aromatische Verbindung ist.

4. Klebstoffzusammensetzung nach Anspruch 1, wobei der Kautschuklatex mindestens eines ist, ausgewählt aus der Gruppe bestehend aus Naturkautschuk (NR), Polyisoprenkautschuk (IR), Styrol-Butadien-Copolymerkautschuk (SBR), Polybutadienkautschuk (BR), Ethylen-Propylen-Dien-Kautschuk (EPDM), Chloroprenkautschuk (CR), halogeniertem Butylkautschuk, Acrylnitril-Butadien-Kautschuk (NBR) und Vinylpyridin-Styrol-Butadien-Copolymerkautschuk (Vp).

5. Klebstoffzusammensetzung nach einem der Ansprüche 1 bis 4, wobei ein Gesamtgehalt an dem Polyphenol und dem Aldehyd, das den aromatischen Ring aufweist, 2 Masse-% bis 30 Masse-% beträgt, und ein Gehalt an dem Kautschuklatex 20 Masse-% bis 90 Masse-% beträgt.

6. Verbundwerkstoff aus Kautschuk und Kord aus organischen Fasern, umfassend:
ein Kautschukelement; und
einen Kord aus organischen Fasern,
wobei mindestens ein Teil des Kords aus organischen Fasern mit der Klebstoffzusammensetzung nach einem der Ansprüche 1 bis 5 beschichtet ist.

7. Verbundwerkstoff aus Kautschuk und Kord aus organischen Fasern nach Anspruch 6, wobei der Kord aus organischen Fasern ein Kord aus Polyethylenterephthalat- (PET) Fasern ist.

8. Reifen, umfassend
den Verbundwerkstoff aus Kautschuk und Kord aus organischen Fasern nach Anspruch 6 oder 7.

## Revendications

1. Composition adhésive comprenant :
du polyphénol ne contenant pas de résorcine ;
un aldéhyde présentant un cycle aromatique ;
un composé isocyanate ; et
du latex de caoutchouc,
dans lequel le polyphénol présente trois groupes hydroxyle ou plus, et
dans lequel la teneur en composé isocyanate est de 5 % en masse à 65 % en masse.

2. Composition adhésive selon la revendication 1, dans laquelle l'aldéhyde comporte deux groupes aldéhyde ou plus.

3. Composition adhésive selon la revendication 1 ou 2, dans laquelle le composé isocyanate est un composé aromatique contenant un groupe isocyanate (bloqué).

4. Composition adhésive selon la revendication 1, dans laquelle le latex de caoutchouc est au moins un latex choisi parmi le groupe constitué de caoutchouc naturel (NR), de caoutchouc polyisoprène (IR), de caoutchouc copolymère styrène-butadiène (SBR), de caoutchouc polybutadiène (BR), de caoutchouc éthylène-propylène-diène (EPDM), de caoutchouc chloroprène (CR), de caoutchouc butyle halogéné, de caoutchouc acrylonitrile-butadiène (NBR) et de caoutchouc copolymère vinylpyridine-styrène-butadiène (Vp).

5. Composition adhésive selon l'une quelconque des revendications 1 à 4, dans laquelle la teneur totale en polyphénol et en aldéhyde à cycle aromatique est de 2 % en masse à 30 % en masse et une teneur en latex de caoutchouc de 20 % en masse à 90 % en masse.

6. Composite de cordon en caoutchouc et fibres organiques comprenant :
un élément en caoutchouc ; et
un cordon en fibre organique,
dans lequel au moins une partie du cordon en fibre organique est revêtue de la composition adhésive selon l'une quelconque des revendications 1 à 5.

7. Composite de cordon en caoutchouc et fibres organiques selon la revendication 6, dans lequel le cordon en fibre organique est un cordon en fibre de polyéthylène téréphtalate (PET).

8. Pneu comprenant :
le composite de cordon en caoutchouc et fibres organiques selon la revendication 6 ou 7.
